# EUROPÄISCHE PATENTSCHRIFT

(11) **EP 2 169 266 B1**
(45) Veröffentlichungstag und Bekanntmachung des Hinweises auf die Patenterteilung: **28.09.2011**
(21) Anmeldenummer: 09167057.0
(22) Anmeldetag: 03.08.2009
(51) Int. Cl.: F16H 3/095

(54) **Gruppengetriebe und Verfahren zum Lastausgleich bei einem Gruppengetriebe**
Range-change transmission and method for balancing the load in a range-change transmission
Transmission à changement de gamme et procédé d'équilibrage de charge dans une transmission à changement de gamme

(30) Priorität: 24.09.2008 DE 102008042320
(43) Veröffentlichungstag der Anmeldung: 31.03.2010
(73) Patentinhaber: ZF Friedrichshafen AG, 88038 Friedrichshafen (DE)
(72) Erfinder: Müller, Bernd, 88046, Friedrichshafen (DE); Steinborn, Mario, 88046, Friedrichshafen (DE)

(56) Entgegenhaltungen:
- EP-A- 0 631 895
- DE-A1- 3 739 898
- DE-A1- 10 021 761
- DE-A1- 10 330 159
- DE-A1- 19 708 929
- DE-A1-102005 025 567
- DE-A1-102006 015 661
- US-A1- 2008 188 349

## Beschreibung

Die vorliegende Erfindung betrifft ein Gruppengetriebe mit zumindest zwei Vorgelegewellen für ein Fahrzeug gemäß der im Oberbegriff des Patentanspruches 7 näher definierten Art. Ferner betrifft die Erfindung ein Verfahren zum Lastausgleich bei einem Gruppengetriebe gemäß der im Oberbegriff des Patentanspruches 1 näher definierten Art.

Aus der Fahrzeugtechnik sind Gruppengetriebe in Vorgelegewellenbauweise für Nutzkraftfahrzeuge bekannt. Üblicherweise wird der Nebenabtrieb bei diesen Gruppengetrieben über eine Kupplung an einer der Vorgelegewellen gekoppelt. Bei einem Gruppengetriebe mit zwei Vorgelegewellen lässt sich der Nebenabtrieb aufgrund der ungleichmäßigen Momentenverteilung an den Vorgelegewellen nur in einer bestimmten Stellung der Vorschaltgruppe verwenden. Dies führte zu einer Gangeinschränkung während des Betriebs des Nebenabtriebes. Zudem sind keine Getriebeschaltungen während des aktivierten Nebenabtriebes möglich. Darüber hinaus kann das Koppeln bzw. Einschalten oder das Entkoppeln bzw. Ausschalten des Nebenabtriebes nicht während der Fahrt erfolgen.

Beispielsweise aus der gattungsbildenden Druckschrift 100 21 761 A1 ist eine Schalteinrichtung für ein Getriebe mit Lastverteilung auf zwei Vorgelegewellen mit zwei Konstantenradzügen bekannt. Wenigstens ein Konstantenradzug dient der Übertragung von in das Getriebe eingeleitetem Drehmoment auf diejenige Vorgelegewelle, an der ein Nebenabtrieb angeordnet ist. Zudem umfasst die Schalteinrichtung eine Synchronisiereinrichtung. Die Konstantenradzüge weisen drei Zahnräder auf, von denen zwei auf den Vorgelegewellen angeordnet sind, während das dritte Zahnrad auf der Eingangswelle oder der Hauptwelle des Getriebes axial fixiert, aber radial beweglich angeordnet ist. Das nicht auf einer der Vorgelegewellen angeordnete Zahnrad des zweiten Konstantenradzugs ist in radialer Richtung in einer Kupplungseinrichtung derart fixiert, dass die Kupplungseinrichtung ein radiales Spiel des Zahnrades in Bezug auf die Welle zulässt, auf der das Zahnrad angeordnet ist. Zwischen der Synchronisiereinrichtung und dem Zahnrad des zweiten Konstantenradzuges, welches nicht auf einer der Vorgelegewellen angeordnet ist, ist eine Kupplung vorgesehen. Wenn von der Eingangswelle des Getriebes das in das Getriebe eingeleitete Drehmoment über die Schalteinrichtung auf das Zahnrad des zweiten Konstantenradzuges geschaltet wird, welches nicht auf einer der Vorgelegewellen montiert ist, so stützen sich die beiden Zahnflanken der jeweils eingreifenden Zähne auf den Zahnflanken der entsprechenden Gegenzahnräder der Vorgelegewellen ab. Durch die radiale Fixierung des Zahnrades des zweiten Konstantenradzuges in der Kupplungseinrichtung kann das Zahnrad radial nicht mehr ausweichen. Das Zahnrad des ersten Konstantenradzugs, das nicht auf den Vorgelegewellen angeordnet ist, bildet durch seine Radiallagerung ein Koppelglied zwischen den beiden Vorgelegewellen und ergibt dadurch eine formschlüssige Rückkopplung von der Vorgelegewelle, an der der Nebenantrieb angeschlossen ist, auf die gegenüberliegende und bisher unbelastete Vorgelegewelle. Infolge dieser Rückkopplung werden die Zahnkräfte das Zahnrad des zweiten Konstantenradzuges auf beiden Vorgelegewellen je zur Hälfte verteilt und über den ersten Konstantenradzug wieder zurückgeführt auf die Vorgelegewelle, an der der Nebenabtrieb angeschlossen ist.

Bei der bekannten Schalteinrichtung ergibt sich jedoch der gravierende Flachteil, dass eine Vielzahl von zusätzlichen Bauteilen erforderlich sind, um den Schaltmechanismus zur Lastverteilung an der Vorschaltgruppe zu realisieren.

Der vorliegenden Erfindung liegt die Aufgabe zu Grunde, ein Gruppengetriebe und ein Verfahren der eingangs beschriebenen Gattung vorzuschlagen, mit denen ein Lastausgleich während des Betriebes des Nebenabtriebes auf einfachste Weise realisierbar ist, ohne dass zusätzliche Bauteile erforderlich sind.

Die der Erfindung zu Grunde liegende Aufgabe kann durch ein Gruppengetriebe mit zumindest zwei Vorgelegewellen für ein Fahrzeug, insbesondere für ein Nutzfahrzeug gelöst werden, wobei ein Nebenabtrieb über ein Drehmomentübertragungselement mit einer ersten Vorgelegewelle koppelbar ist, und wobei eine zweite Vorgelegewellen mit einer Getriebebremseinrichtung zum Realisieren eines Lastausgleichs zwischen den Vorgelegenwellen koppelbar ist, wenn der Nebenantrieb mit der ersten Vorgelegewelle gekoppelt ist.

Dadurch, dass eine z. B. bereits vorgesehene Getriebebremseinrichtung an der unbelasteten beziehungsweise nicht mit dem Nebenabtrieb verbundenen Vorgelegewelle bei dem erfindungsgemäß vorgeschlagenen Gruppengetriebe verwendet wird, kann ein Lastausgleich zwischen den beiden Vorgelegewellen realisiert werden, so dass der Nebenabtrieb in beiden Stellungen des Gruppengetriebes eingesetzt werden kann. Durch die erfindungsgemäße Anordnung bereits vorhandener Bauteile können die eingangs genannten Nachteile des Standes der Technik auf einfachste Weise gelöst werden, ohne dass zusätzliche Komponenten oder Bauteile erforderlich sind.

Als Getriebebremseinrichtung und als Drehmomentübertragungselement zum Ankoppeln des Nebenabtriebes können eine Lamellenbremse, eine Lamellenkupplung, eine Strömungskupplung oder dergleichen verwendet werden. Es ist auch möglich, dass zum Beispiel als Drehmomentübertragungselement eine Klauenkupplung oder ein anderes formschlüssiges Übertragungselement verwendet wird.

Das Drehmomentübertragungselement und die Getriebebremseinrichtung können bevorzugt fluidbetätigt oder auch elektromagnetisch betätigt werden. Es sind jedoch auch andere Betätigungsarten denkbar.

Der Lastausgleich bei dem vorgeschlagenen Gruppengetriebe kann vorzugsweise durch einen Schlupfbetrieb bei Verwendung von z. B. reibschlüssigen Elementen als Drehmomentübertragungselement und/oder als Getriebebremseinrichtung realisiert werden. Im Schlupfbetrieb ergibt sich eine entsprechende Wärmeentwicklung, der gemäß einer Weiterbildung der Erfindung durch eine entsprechende dauerfeste Auslegung des Drehmomentübertragungselement und der Getriebebremseinrichtung entgegengewirkt werden kann.

Das erfindungsgemäße Gruppengetriebe kann bevorzugt z.B. ein 12-Gang-Gruppengetriebe mit zwei Vorgelegewellen sein.

Die der Erfindung zu Grunde liegende Aufgabe wird auch durch ein Verfahren zum Lastausgleich an den Vorgelegewellen eines Gruppengetriebes bei aktiviertem beziehungsweise angekoppeltem Nebenabtrieb gelöst, wobei bei einer ersten Schaltstellung einer Vorschaltgruppe des Gruppengetriebes, in der die nicht mit dem Nebenabtrieb gekoppelte Vorgelegewelle unbelastet ist, ein Lastmoment auf diese unbelastete Vorgelegewelle zum Lastausgleich zwischen den Vorgelegewellen aufgebracht wird.

Auf diese Weise wird mit dem vorgeschlagenen Verfahren unabhängig von der Schaltstellung der Vorschaltgruppe während des Betriebes des Nebenabtriebes eine gleiche Momentenverteilung an den Vorgelegewellen realisiert.

Wenn beispielsweise ein reibschlüssiges Drehmomentübertragungselement und eine reibschlüssige Getriebebremseinrichtung verwendet werden, kann gemäß einer bevorzugten Ausführung der Erfindung vorgesehen sein, dass die reibschlüssige Getriebebremseinrichtung an der unbelasteten Vorgelegewelle und das reibschlüssige Drehmomentübertragungselement zum Ankoppeln des Nebenabtriebes im Schlupf betrieben werden.

Zum Realisieren des Schlupfbetriebes kann bevorzugt eine Kraftansteuerung verwendet werden. In Abhängigkeit der Betätigungsart der Getriebebremseinrichtung und des Drehmomentübertragungselements kann durch die Kraftregelung beziehungsweise Kraftsteuerung ein entsprechender Druck bei fluidbetätigten Elementen oder ein entsprechender Strom bei elektromagnetisch betätigten Elementen eingestellt werden, um den Schlupfbetrieb zu realisieren.

Der während des Schlupfbetriebes auftretenden Wärmeentwicklung kann, wie bereits erwähnt, anordnungsseitig durch entsprechende Auslegung der reibschlüssigen Elemente entgegengewirkt werden. Es ist jedoch auch möglich, dass verfahrensmäßig die auftretende Wärmeentwicklung begrenzt wird. Beispielsweise kann bei Erkennen einer Grenztemperatur bei dem Drehmomentübertragungselement und/oder bei der Getriebebremseinrichtung eine Abschaltung bzw. Entkoppeln erfolgen. Nach dem Entkoppeln des neben Abtriebes und der Getriebebremseinrichtung kann zum Beispiel eine Umschaltung der Vorschaltgruppe erfolgen, so dass der Nebenabtrieb danach ohne den Einsatz der Getriebebremseinrichtung betrieben werden kann. Sobald zum Beispiel eine Abkühlung der Getriebebremseinrichtung und des Drehmomentübertragungselements erfolgt ist, kann wieder eine Rückschaltung der Vorschaltgruppe erfolgen.

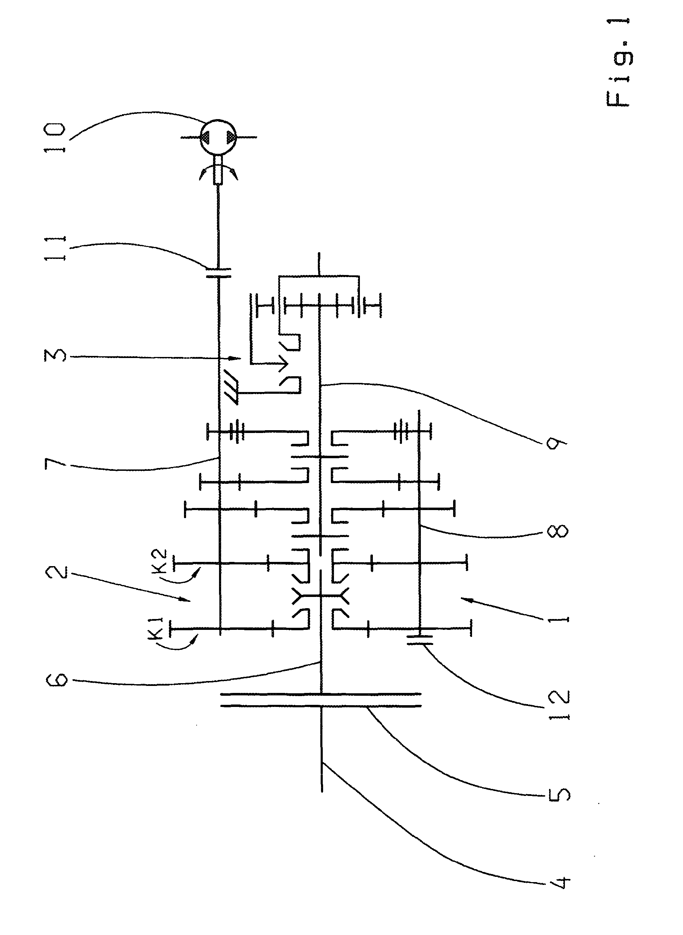

Nachfolgend wird die Erfindung anhand der Zeichnung näher erläutert. Die einzige Figur der Erfindung zeigt schematisch eine mögliche Ausführungsform eines erfindungsgemäßen Gruppengetriebes, bei der z.B. das vorgeschlagene Verfahren eingesetzt werden kann. Es sind jedoch auch andere Einsatzgebiete denkbar.

In der Figur ist exemplarisch ein Gruppengetriebe 1 mit einer Vorschaltgruppe 2 und einer Nachschaltgruppe 3 gezeigt. Die Vorschaltgruppe 2 weist zwei Schaltstellungen auf, wobei in der ersten Schaltstellung der erste Konstantenradzug K1 und in der zweiten Schaltstellung der zweite Konstantenradzug K2 aktiv ist. Die Nachschaltgruppe 3 ist als Planetengetriebe der Getriebeausgangswelle 9 zugeordnet.

Das Gruppengetriebe 1 wird über eine Motorwelle 4 angetrieben, die über eine Fahrkupplung 5 mit einer Getriebeeingangswelle 6 zum Antrieb des Fahrzeuges gekoppelt ist. Ferner umfasst das Gruppengetriebe 1 eine erste Vorgelegewelle 7 und eine zweite Vorgelegewelle 8, welche Gangzahnräder zum Realisieren verschiedener Übersetzungsverhältnisse für Vorwärts- und Rückwärtsgänge umfassen.

Der ersten Vorgelegewelle 7 ist ein Nebenabtrieb 10 zugeordnet. Der Nebenabtrieb 10 ist über ein Drehmomentübertragungselement 11 mit der Vorgelegewelle 7 koppelbar. Zum Realisieren eines Lastausgleichs ist der zweiten Vorgelegewelle 8 eine Getriebebremseinrichtung 12 zugeordnet. Auf diese Weise kann bei aktiviertem bzw. angekoppeltem Nebenabtrieb 10 ein entsprechendes Lastmoment auf die zweite Vorgelegewelle 8 aufgebracht werden, so dass eine gleiche Drehmomentverteilung an den beiden Vorgelegewellen 7, 8 realisiert wird. Demzufolge sind aufgrund des Lastausgleichs Getriebeschaltungen auch während des aktivierten Nebenabtriebes 10 möglich. Zudem kann der Nebenabtrieb 10 auch während der Fahrt zugeschaltet bzw. angekoppelt oder abgeschaltet bzw. entkoppelt werden. Darüber hinaus gibt es keine Übersetzungseinschränkungen während des Betriebes des Nebenabtriebes 10.

Vorzugsweise kann als Getriebebremseinrichtung 12 eine Lamellenbremse und als Drehmomentübertragungselement 11 zum Koppeln des Nebenabtriebes 10 an die erste Vorgelegewelle 7 eine Klauenkupplungen verwendet werden. Es ist auch möglich, dass als Drehmomentübertragungselement 11 eine Lamellenkupplung oder eine Strömungskupplung verwendet werden. Als Getriebebremseinrichtung 12 kann ebenso eine Lamellenkupplung oder auch eine Strömungskupplung eingesetzt werden.

Bei der Verwendung von formschlüssigen Elementen können die Momente, welche sich durch die Anpresskraft multipliziert mit dem Hebelarm und dem Reibwert ergeben, nahezu gleich sein, so dass der Lastausgleich an den Vorgelegewellen 7 und 8 realisiert wird.

### Bezugszeichen

- 1: Gruppengetriebe
- 2: Vorschaltgruppe
- 3: Nachschaltgruppe
- 4: Motorwelle
- 5: Fahrkupplung
- 6: Getriebeeingangswelle
- 7: erste Vorgelegewelle
- 8: zweite Vorgelegewelle
- 9: Getriebeausgangswelle
- 10: Nebenabtrieb
- 11: Drehmomentübertragungselement
- 12: Getriebebremseinrichtung

## Patentansprüche

1. Verfahren zum Lastausgleich an den Vorgelegewellen (7, 8) eines Gruppengetriebes bei zugeschaltetem Nebenabtrieb (10), **dadurch gekennzeichnet, dass** bei einer ersten Schaltstellung einer Vorschaltgruppe (2) des Gruppengetriebes, in der die nicht mit dem Nebenabtrieb (10) gekoppelte Vorgelegewelle (8) unbelastet ist, ein Lastmoment auf die unbelastete Vorgelegewelle (8) zum Lastausgleich aufgebracht wird.

2. Verfahren nach Anspruch 1, **dadurch gekennzeichnet, dass** eine reibschlüssige Getriebebremseinrichtung (12) an der unbelasteten Vorgelegewelle (8) und ein reibschlüssiges Drehmomentübertragungselement (11) im Schlupf betrieben werden.

3. Verfahren nach Anspruch 2, **dadurch gekennzeichnet, dass** zum Realisieren des Schlupfbetriebes eine Kraftansteuerung verwendet wird.

4. Verfahren nach Anspruch 2 oder 3, **dadurch gekennzeichnet, dass** eine während des Schlupfbetriebes auftretende Wärmeentwicklung begrenzt wird.

5. Verfahren nach Anspruch 4, **dadurch gekennzeichnet, dass** der Nebenabtrieb (10) und/oder die Getriebebremseinrichtung (12) bei Erkennen einer Grenztemperatur bei dem Drehmomentübertragungselement (11) und/oder bei der Getriebebremseinrichtung (12) von der zugeordneten Vorgelegewelle (7, 8) entkoppelt werden.

6. Verfahren nach einem der Ansprüche 2 bis 5, **dadurch gekennzeichnet, dass** nach dem Entkoppeln des Nebenabtriebes (10) und der Getriebebremseinrichtung (12) die Vorschaltgruppe (2) umgeschaltet wird, so dass der Nebenabtrieb (10) nach dem Wiederankoppeln mit nahezu keinem Schlupf betrieben wird.

7. Gruppengetriebe (1) für ein Fahrzeug mit zumindest zwei Vorgelegewellen (7, 8) und mit einer Vorschaltgruppe (2), wobei ein Nebenabtrieb (10) über ein Drehmomentübertragungselement (11) mit einer ersten Vorgelegewelle (7) koppelbar ist, **dadurch gekennzeichnet, dass** eine zweite Vorgelegewelle (8) mit einer Getriebebremseinrichtung (12) zum Realisieren eines Lastausgleichs zwischen den Vorgelegewellen (7, 8) koppelbar ist, wenn der Nebenabtrieb (10) mit der ersten Vorgelegewelle (7) gekoppelt ist.

8. Gruppengetriebe (1) nach Anspruch 7, **dadurch gekennzeichnet, dass** die Getriebebremseinrichtung (12) als Lamellenbremse, Lamellenkupplung und/oder Strömungskupplung ausgebildet ist.

9. Gruppengetriebe (1) nach Anspruch 7 oder 8, **dadurch gekennzeichnet, dass** das Drehmomentübertragungselement (11) zum Ankoppeln des Nebenabtriebes (10) als Klauenkupplungen, Lamellenkupplung und/oder Strömungskupplung ausgebildet ist.

10. Gruppengetriebe (1) nach einem der Ansprüche 7 bis 9, **dadurch gekennzeichnet, dass** Drehmomentübertragungselement (11) und/oder die Getriebebremseinrichtung (12) fluidbetätigt oder elektromagnetisch betätigt ausgeführt sind.

11. Gruppengetriebe (1) nach einem der Ansprüche 7 bis 10, **dadurch gekennzeichnet, dass** reibschlüssige Elemente als Drehmomentübertragungselement (11) oder Getriebebremseinrichtung (12) zum Kompensieren der Wärmeentwicklung während des Lastausgleiches dauerfest zumindest an dem jeweiligen Arbeitspunkt ausgelegt sind.

12. Gruppengetriebe (1) nach einem der Ansprüche 7 bis 11, **dadurch gekennzeichnet, dass** ein 12-Gang-Gruppengetriebe mit zwei Vorgelegewelle (7, 8) vorgesehen ist.

## Claims

1. Method for equalizing the loads on the countershafts (7, 8) of a range-change transmission when a power take-off (10) is activated, **characterized in that**, when a front-mounted range unit (2) of the range-change transmission is in a first shift position in which the countershaft (8) not coupled to the power take-off (10) is unloaded, a load torque is applied to the unloaded countershaft (8) for load equalization.

2. Method according to Claim 1, **characterized in that** a frictionally engaging transmission brake device (12) on the unloaded countershaft (8) and a frictionally engaging torque-transmitting element (11) are operated in a slipping state.

3. Method according to Claim 2, **characterized in that** power control is used to realize the slipping operation.

4. Method according to Claim 2 or 3, **characterized in that** heat generation arising during the slipping operation is limited.

5. Method according to Claim 4, **characterized in that** the power take-off (10) and/or the transmission brake device (12) are decoupled from the associated countershaft (7, 8) in the event of a threshold temperature being detected in the torque-transmitting element (11) and/or in the transmission brake device (12).

6. Method according to one of Claims 2 to 5, **characterized in that**, after the decoupling of the power take-off (10) and the transmission brake device (12), the front-mounted range unit (2) is switched such that the power take-off (10) is operated with virtually no slip after the re-coupling.

7. Range-change transmission (1) for a vehicle, having at least two countershafts (7, 8) and having a front-mounted range unit (2), it being possible for a power take-off (10) to be coupled to a first countershaft (7) via a torque-transmitting element (11), **characterized in that** a second countershaft (8) can be coupled to a transmission brake device (12) in order to realize load equalization between the countershafts (7, 8) when the power take-off (10) is coupled to the first countershaft (7).

8. Range-change transmission (1) according to Claim 7, **characterized in that** the transmission brake device (12) is designed as a multiplate brake, multiplate clutch and/or fluid coupling.

9. Range-change transmission (1) according to Claim 7 or 8, **characterized in that** the torque-transmitting element (11) for coupling the power take-off (10) is designed as claw couplings, multiplate clutch and/or fluid coupling.

10. Range-change transmission (1) according to one of Claims 7 to 9, **characterized in that** the torque-transmitting element (11) and/or the transmission brake device (12) are designed so as to be fluid-actuated or electromagnetically actuated.

11. Range-change transmission (1) according to one of Claims 7 to 10, **characterized in that** frictionally engaging elements, as torque-transmitting element (11) or transmission brake device (12), are designed to be fatigue-resistant at least at the respective operating point in order to compensate the heat generation during the load equalization.

12. Range-change transmission (1) according to one of Claims 7 to 11, **characterized in that** a 12-gear range-change transmission having two countershafts (7, 8) is provided.

## Revendications

1. Procédé d'équilibrage de charge au niveau des arbres intermédiaires (7, 8) d'une transmission à changement de gamme dans le cas d'une prise de force auxiliaire incorporée (10), **caractérisé en ce que** dans le cas d'une première position de changement d'un groupe monté devant (2) de la transmission à changement de gamme, dans laquelle l'arbre intermédiaire (8) non accouplé à la prise de force auxiliaire (10) n'est pas sollicité, un couple de charge est appliqué sur l'arbre intermédiaire (8) non sollicité en vue de l'équilibrage de charge.

2. Procédé selon la revendication 1, **caractérisé en ce qu'**un dispositif de freinage d'engrenage (12) à engagement par friction est actionné sur l'arbre intermédiaire (8) non sollicité et un élément de transfert de couple (11) à engagement par friction est entraîné en glissement.

3. Procédé selon la revendication 2, **caractérisé en ce que** l'on utilise une commande de force pour réaliser l'entraînement de glissement.

4. Procédé selon la revendication 2 ou 3, **caractérisé en ce qu'**un dégagement de chaleur se produisant pendant l'entraînement de glissement est limité.

5. Procédé selon la revendication 4, **caractérisé en ce que** la prise de force auxiliaire (10) et/ou le dispositif de freinage d'engrenage (12) sont désaccouplés de l'arbre intermédiaire associé (7, 8) à la détection d'une température limite dans le cas de l'élément de transfert de couple (11) et/ou dans le cas du dispositif de freinage d'engrenage (12).

6. Procédé selon l'une quelconque des revendications 2 à 5, **caractérisé en ce qu'**après le désaccouplement de la prise de force auxiliaire (10) et du dispositif de freinage d'engrenage (12), le groupe monté devant (2) est commuté, afin que la prise de force auxiliaire (10) soit entraînée pratiquement sans glissement après l'accouplement subséquent.

7. Transmission à changement de gamme (1) pour un véhicule comprenant au moins deux arbres intermédiaires (7, 8) et un groupe monté devant (2), une prise de force auxiliaire (10) pouvant être accouplée par le biais d'un élément de transfert de couple (11) à un premier arbre intermédiaire (7), **caractérisée en ce qu'**un deuxième arbre intermédiaire (8) peut être accouplé à un dispositif de freinage d'engrenage (12) pour réaliser un équilibrage de charge entre les arbres intermédiaires (7, 8), lorsque la prise de force auxiliaire (10) est accouplée au premier arbre intermédiaire (7).

8. Transmission à changement de gamme (1) selon la revendication 7, **caractérisée en ce que** le dispositif de freinage d'engrenage (12) est réalisé sous forme de frein à disques, d'embrayage à disques et/ou d'embrayage hydraulique.

9. Transmission à changement de gamme (1) selon la revendication 7 ou 8, **caractérisée en ce que** l'élément de transfert de couple (11) est réalisé pour l'accouplement de la prise de force auxiliaire (10) sous forme d'embrayages à griffes, d'embrayage à disque et/ou d'embrayage hydraulique.

10. Transmission à changement de gamme (1) selon l'une quelconque des revendications 7 à 9, **caractérisée en ce que** l'élément de transfert de coupe (11) et/ou le dispositif de freinage d'embrayage (12) sont réalisés avec une commande hydraulique ou électromagnétique.

11. Transmission à changement de gamme (1) selon l'une quelconque des revendications 7 à 10, **caractérisée en ce que** des éléments d'engagement par friction sont conçus en tant qu'élément de transfert de couple (11) ou de dispositif de freinage d'engrenage (12) pour compenser le dégagement de chaleur pendant l'équilibrage de charge, de manière durable au moins au point de travail respectif.

12. Transmission à changement de gamme (1) selon l'une quelconque des revendications 7 à 11, **caractérisée en ce que** l'on prévoit une transmission à changement de gamme à 12 rapports avec deux arbres intermédiaires (7, 8).
